# EUROPEAN PATENT SPECIFICATION

(11) **EP 3 382 564 B1**
(45) Date of publication and mention of the grant of the patent: **27.10.2021**
(21) Application number: 16874513.1
(22) Date of filing: 28.07.2016
(51) Int. Cl.: G06F 13/42, G06F 13/16, G06F 3/06

(54) **NON-VOLATILE STORAGE DEVICE AND METHOD FOR ACCESSING NON-VOLATILE STORAGE DEVICE**
NICHTFLÜCHTIGE SPEICHERVORRICHTUNG UND VERFAHREN ZUM ZUGREIFEN AUF EINE NICHTFLÜCHTIGE SPEICHERVORRICHTUNG
DISPOSITIF DE MÉMOIRE NON VOLATILE ET PROCÉDÉ D'ACCÈS AU DISPOSITIF DE MÉMOIRE NON VOLATILE

(30) Priority: 18.12.2015 CN 201510963005
(43) Date of publication of application: 03.10.2018
(73) Proprietor: Huawei Technologies Co., Ltd., Longgang District Shenzhen, Guangdong 518129 (CN)
(72) Inventor: LI, Yansong, Shenzhen Guangdong 518129 (CN)
(74) Representative: Thun, Clemens
(86) International application number: PCT/CN2016/091997
(87) International publication number: WO 2017/101452

(56) References cited:
- EP-A1- 3 296 883
- CN-A- 1 567 245
- CN-A- 101 477 505
- CN-A- 103 885 900
- CN-A- 105 608 027
- US-A1- 2002 185 337
- US-A1- 2014 013 187

## Description

### TECHNICAL FIELD

The present invention relates to the field of computers, and in particular, to a non-volatile storage device and a method for accessing a non-volatile storage device in the field of computers.

### BACKGROUND

With development of information technology, especially, popularity of the Internet, various types of data grow rapidly in volume. In particular, growth of video data brings enormous pressure to existing storage systems. Therefore, large-capacity and high-performance storage systems are urgently needed to effectively store and quickly access the data.

US 2014/0013187 A1 refers to a method including receiving a request to read data at a data storage device from an external device. In response to determining that the data is in a first memory of the data storage device, a first read operation is initiated to read the data from the first memory and a response is sent to the external device. The response indicates an error correction code (ECC) error. A read latency of the first read operation exceeds a reply time period corresponding to the request. The response is sent prior to completion of the first read operation and within reply time period.

Despite mature technologies, low costs, and large capacities, conventional mechanical hard disks have been gradually replaced by solid-state drives due to performance bottlenecks and high power consumption. Solid-state drives store data by using a non-volatile semiconductor storage, and have obvious advantages in terms of performance, power consumption, and reliability. Solid-state drives have a plurality of forms, and may be divided, according to different external ports, into three types: a solid-state drive using a serial hard disk (Serial Advanced Technology Attachment, "SATA" for short) interface or a serial SCSI interface (Serial Attached SCSI, "SAS" for short; small computer system interface (Small Computer System Interface, "SCSI" for short)), a solid-state drive using a peripheral component interconnect express (Peripheral Component Interface Express, "PCIe" for short) interface standard, and a solid-state drive using a memory interface. The solid-state drive using a memory interface is referred to as a flash memory stick. The first two types of solid-state drives, though being mature technologies, cannot meet a storage requirement of increasing data volumes due to relatively large volume and low storage density. In addition, protocol overheads are higher and access delays are increased. Flash memory sticks are compatible with existing memory controllers and memory module slots and characterized by large capacities of the solid-state drives and quick access of memories, and therefore, get increasing attention from the industry.

Although the flash memory sticks have these advantages, there is still a problem that needs to be resolved. A memory interface has a very high rate. For example, an equivalent rate of a double data rate 3 (Double Data Rate 3, "DDR3" for short) memory interface may reach 1600 MHz, and a bandwidth is 12.8 GB/s. A storage chip of a flash memory stick needs to take hundreds of microseconds to read data of a page. Therefore, the two have greatly different rates. A time-sequence characteristic of the memory interface is that a read/write operation initiated by a host needs to end within a time period. A read operation is used as an example. After initiating a read operation on a destination address, the host needs to start to receive data after dozens of nanoseconds. After all data is received, a current access period ends. In this way, if the host initiates the read operation on a flash memory stick, and the flash memory stick cannot send needed data in a timely manner, the host obtains incorrect data.

### SUMMARY

In view of this, embodiments of the present invention provide a non-volatile storage device and a method for accessing a non-volatile storage device, to resolve a problem that a host cannot obtain correct data when a high-speed memory interface is used to access a low-speed flash memory.

This problem is solved by the subject matter of the independent claims. Further implementation forms are provided in the dependent claims.

According to a first aspect, a non-volatile storage device is provided, where the non-volatile storage device includes an interface module, a control module, a read cache, and a storage chip. The interface module is configured to: receive a first read request signal sent by a host, where the first read request signal includes an address of the storage chip; when data is not stored in the read cache, instruct the control module to read the data from the storage chip; and send an interrupt signal to the host to instruct the host to execute an interrupt handler after the read operation period, and send predetermined data to the host, to cause the host to end the read operation period.

Therefore, when the host initiates a read operation on the non-volatile storage device, but the non-volatile storage device cannot return data in a timely manner, the non-volatile storage device sends the interrupt signal, so that the host enters the interrupt handler to wait for correct data to be read from the storage chip, thereby preventing the host from obtaining incorrect data to perform a subsequent operation.

With reference to the first aspect, in a first possible implementation of the first aspect, the control module is configured to: read the data from the storage chip according to an instruction of the interface module, and store the data in the read cache. The interface module is further configured to: receive a second read request signal sent by the host after exiting the interrupt handler , where the second read request signal includes the address of the storage chip; and send the data stored in the read cache by the control module to the host.

In this way, the data in the storage chip is stored in the read cache while the host delays, thereby preventing the host from continuing to delay when initiating repeated access again, and improving read efficiency.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a structural diagram of a flash memory stick in the prior art;
FIG. 3 is a structural diagram of a non-volatile storage device according to an embodiment of the present invention;
FIG. 4 is an interaction flowchart of a method for reading from a non-volatile storage device according to an embodiment of the present invention;
FIG. 5 is an interaction flowchart of a method for writing to a non-volatile storage device according to an embodiment of the present invention;
FIG. 6 is a structural diagram of a host according to an embodiment of the present invention; and
FIG. 7 is a structural diagram of a host according to an embodiment of the present invention.

### DESCRIPTION OF EMBODIMENTS

It should be understood that, a storage chip of a non-volatile storage device described in the embodiments of the present invention may include a flash memory chip, and may also include another storage apparatus, for example, a phase change random access memory (Phase Change Random Access Memory, "PCRAM" for short) or a resistive random access memory (Resistive Random Access Memory, "ReRAM" for short).

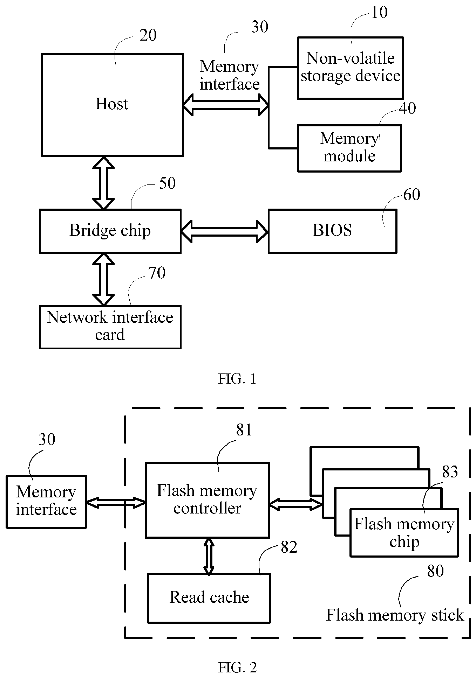

FIG. 1 is a schematic architectural diagram of an application scenario according to an embodiment of the present invention. As shown in FIG. 1, a computer system using a solid-state drive may include: a non-volatile storage device 10, a host 20, a memory interface 30, a memory module 40, a bridge chip 50, a basic input/output system (Basic Input Output System, "BIOS" for short) 60, and a network interface card 70. In the computer system, the host 20 may access the memory module 40 or the non-volatile storage device 10 by using the memory interface 30. The memory interface 30 may be a standard interface such as a double data rate 2 (Double Data Rate 2, "DDR2" for short) interface, a double data rate 3 (Double Data Rate 3, "DDR3" for short) interface, or a double data rate 4 (Double Data Rate 4, "DDR4" for short) interface. The bridge chip 50 is connected to the BIOS 60. The host 20 and the bridge chip 50 may provide a PCIe interface, configured to connect to a PCIe solid-state drive. The bridge chip 50 may provide a serial hard disk (Serial Advanced Technology Attachment, "SATA" for short) interface, configured to connect to an SATA solid-state drive.

FIG. 2 is a structural diagram of a flash memory stick 80 in the prior art. FIG. 2 shows a memory interface 30 and the flash memory stick 80. The flash memory stick 80 includes a flash memory controller 81, a read cache 82, and a flash memory chip 83. The flash memory controller 81 is connected to the host 20 by using the memory interface 30, and is connected to the flash memory chip 83. The flash memory controller 81 is further connected to the read cache 82. The read cache 82 may be implemented by a double data rate synchronous dynamic random access memory (Double Data Rate, "DDR" for short), has a speed similar to that of the memory interface, and may send, within a time required by the memory interface 30, data that the host 20 needs to read.

When the host 20 initiates read access to the flash memory stick 80, if data that the host 20 requests to read is already stored in the read cache 82, the flash memory controller 81 retrieves the data from the read cache 82 and returns the data to the host 20. A read speed of the read cache 82 is very high and may match that of the memory interface 30. Therefore, the data can be sent in a timely manner. Subsequently, a current read access period ends. The read access period starts from a time at which the host 20 sends a read request signal to a time at which the data sent by the flash memory stick 80 is all received and the memory interface 30 resumes an idle state.

If the data that the host requests to read is not in the read cache 82, the flash memory controller 81 needs to read the data from the flash memory chip 83. Because the flash memory chip 83 has a relatively low speed and cannot send, in a timely manner, the data needed by the host 20, the flash memory controller 81 first sends pre-generated uncorrectable data having an error correcting code (Error Correcting Code, "ECC" for short) error, starts access to the flash memory chip 83 at the same time, and stores the data in the read cache 82 after obtaining the data.

After receiving the data sent by the flash memory controller 81, a memory controller of the host 20 checks the data, and if finding that there is an uncorrectable ECC error, sends an interrupt command to a processor kernel of the host 20. Because the data received by the memory controller is the pre-generated data having the ECC error, after receiving the incorrect data, the memory controller of the host 20 eventually sends an interrupt command to the processor kernel, so that the processor executes the interrupt handler.

The host 20 delays by a fixed time period in the interrupt handler, to wait for the data to be read from the flash memory chip 83.

After exiting the interrupt handler, the host 20 initiates a read operation on the flash memory stick 80 again. Because the data is already stored in the read cache 82 at this time, the flash memory chip 83 may send correct data to the host 20.

Although this method can prevent the host from obtaining incorrect data when data is transmitted between the memory interface and the flash memory stick, there are the following problems:

First, an ECC error of memory data is a serious fault, and may be processed by, for example, an exception handler of a Linux kernel. To distinguish whether the error is real or generated by people, the Linux kernel needs to be modified. Therefore, there may be a risk of being incompatible with Linux of a standard version.

Second, when the host 20 initiates a read operation on the flash memory stick 80, the flash memory chip 83 may be performing a write operation or an erasure operation, and the flash memory chip 83 cannot perform the read operation at this time. The former requires hundreds of microseconds, and the latter requires several milliseconds. These are all clearly stipulated in device materials of flash memory chips. In the prior art, only a fixed time period is selected as the delay, and this difference is not considered, leading to an unduly long delay. In the prior art, a delay time is determined based on a worst case. For example, a most time-consuming operation (for example, the flash memory chip 83 is currently in an erasure state) is selected. However, actually, such a long delay may not be needed. If the flash memory chip 83 is currently in an idle state, the host 20 does not need to wait for so long, but only needs to wait for a very short time.

Third, this manner is applicable only to a read operation, and is inapplicable to a write operation. For example, when writing a large amount of data to the flash memory stick 80, the host 20 needs to write the data first to a cache. If the cache is already full at this moment, the data cannot continue to be received, and the flash memory stick 80 discards the data sent by the host 20. However, the host 20 does not know that the data is discarded, and cannot trigger a delay by using the pre-generated data having the ECC error. Therefore, this manner can be used only in the read operation.

In view of this, an embodiment of the present invention provides a non-volatile storage device. When a host initiates a read operation on a non-volatile storage device by using a memory interface, but the non-volatile storage device cannot return data in a timely manner, the non-volatile storage device sends an interrupt signal to the host, to prevent the host from obtaining incorrect data.

Currently, a common processor, for example, an x86 processor, integrates a memory controller, and may be directly connected to a non-volatile storage device. To improve performance and a memory capacity, a plurality of memory channels are usually supported, and each memory channel can support a plurality of memory modules. For example, an x86 processor supports four memory channels, and each channel supports a maximum of three memory modules. Therefore, a total of 12 memory modules can be supported. If a capacity of each memory module is 16 GB, a total capacity is 192 GB.

With development and upgrading of interfaces of memory modules over the years, currently, a mainstream interface is a DDR3 interface, a rate may reach 1600 MHz, a data cable width is 64 bits, and a total bandwidth is 12.8 GB/s. DDR4 interfaces are also being popularized. A memory module of the DDR3 interface is used as an example, and the DDR3 interface may include the following signals:
101. Address signal A[0:15]: used to provide a memory chip address, for example, a row address and a column address;
102. BA[2:0]: a bank address, used to select a logical bank inside a memory chip;
103. CK0, CK0#: differential clock, used to provide time-sequence synchronization of memory chip access;
104. CKE[0:1]: a clock enabling signal;
105. ODT[0:1]: an enabling signal connected to a signal end;
106. Par_In: a parity check bit of an address signal, a write signal WE#, a row access strobe RAS#, and a column access strobe CAS#;
107. RAS#, CAS#, and WE#, which are a row access strobe, a column access strobe, and a write signal respectively, and used to combine to form various operation command words;
108. RESET#: a reset signal;
109. CS[3:0]#: a chip select signal;
110. SA[2:0]: used to configure inter integrated circuit (Inter Integrated Circuit, "I2C" for short) bus addresses of an electrically erasable programmable read-only memory (Electrically Erasable Programmable Read Only Memory, "EEPROM" for short) and a temperature sensor of a memory module;
111. SCL, SDA, and I2C bus signals: connected to an EEPROM and a temperature sensor of a memory module;
112. CB[7:0]: a data parity check signal;
113. DQ[63:0]: a data signal;
114. DQS[8:0], DQS[8:0]#: data strobe signals;
115. DM[8:0]: a data blocking signal;
116. Signal sent by an ALERT# pin, where a low level indicates that an error occurs inparity check of address and command signals, that is, an error occurs in parity check of a signal combination of A[0:15], RAS#, CAS#, WE#, and Par_In;
117. Signal sent by an EVENT# pin, where a low level indicates that a temperature of a memory module exceeds a threshold; and
118. Power source signal and ground signal, where the power source signal includes a core voltage of 1.5 V for a memory chip, a reference voltage of 0.75 V, a termination voltage of 0.75 V, and a working voltage of 3.3 V for an EEPROM and a temperature sensor.

The non-volatile storage device of the present invention uses the appearance and interface signals of the foregoing memory module, and may be directly inserted into an existing memory module socket. In addition, hardware of a computer system does not need to be modified, and no additional overheads are required.

For a DDR3 memory module slot, there are a total of 240 signal contacts. However, the non-volatile storage device needs to implement only some necessary signals, for example, the address signals A[0:15] and BA[2:0], the data signal DQ[63:0], the control signal CS[3:0]#, RAS#, CAS#, WE#, and the power source signal. Some signals are optional, for example, the parity check signal CB[7:0].

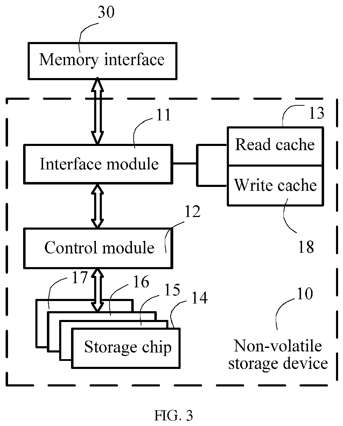

FIG. 3 is a structural diagram of a non-volatile storage device according to an embodiment of the present invention. The non-volatile storage device may use an appearance similar to that of a dual inline memory module (Dual Inline Memory Modules, "DIMM" for short) of a memory module, and may be inserted into an existing memory module slot. The non-volatile storage device 10 is mounted in a memory module socket of a host 20 of a computer by using a memory interface 30. An entire storage capacity of the non-volatile storage device 10 is mapped to memory space of the host 20. The host 20 may access the non-volatile storage device 10 in a same manner as accessing the memory module 40. All operations may be specified according to a memory bus interface protocol.

FIG. 3 shows the memory interface 30 and the non-volatile storage device 10. The non-volatile storage device 10 includes an interface module 11, a control module 12, a read cache 13, a storage chip 14, and a write cache 18.

It should be understood that, the non-volatile storage device may include one storage chip, for example, the storage chip 14, or may include a plurality of storage chips, for example, a storage chip 15, a storage chip 16, and a storage chip 17. A quantity of storage chips in the non-volatile storage device is not limited in the present invention.

The read cache 13 and the write cache 18 may be two divided areas in a same storage chip, or may be two independent storage chips. A write speed and a read speed thereof match that of a memory bus, and memories such as a DDR2 SDRAM and a DDR3 SDRAM may be used. During a read operation, the interface module 11 may first store data in the read cache 13. When the host sends a read request again next time, and the interface module 11 determines that data corresponding to a target address is already stored in the read cache 13, the storage chip 14 may not need to be accessed, and the data is directly retrieved from the read cache 13 and is sent to the host, thereby improving a read operation speed. During a write operation, data delivered by the host may be first stored in the write cache 18, a current access period ends, the host 20 may continue to execute another instruction, then the interface module 11 retrieves the data from the write cache 18, and the data is written to the storage chip 14 by using the control module 12. This can improve a write operation speed.

The control module 12 obtains, from the interface module 11, a read/write request delivered by the host, converts a target address to a physical address of the storage chip 14, and starts a read/write operation, and may further send a working state (for example, an idle state, a write state, and an erasure state) of the storage chip 14 corresponding to the target address to the interface module 11, for read by the host 20. In addition, the control module 12 further has functions such as wear leveling and bad block management, to improve a service life of the storage chip 14.

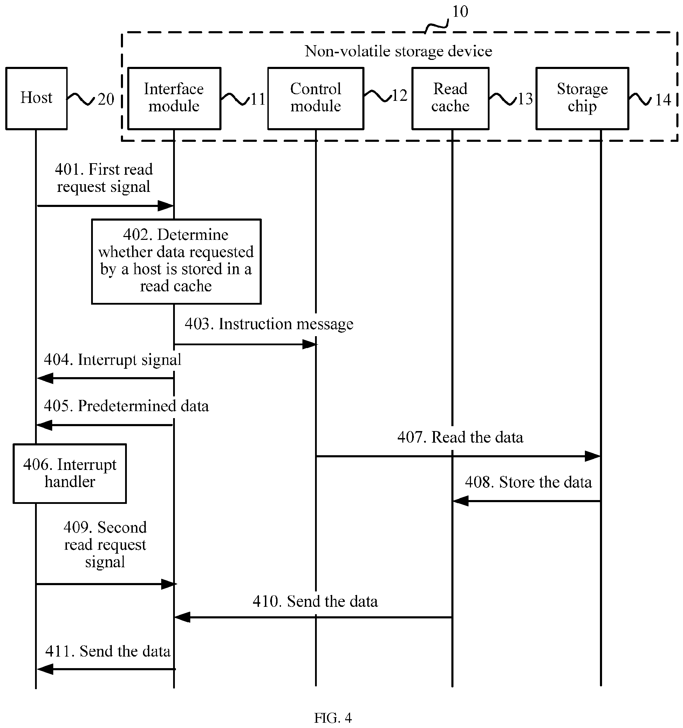

The storage chip 14 is configured to store data. To improve a capacity and an access speed, a plurality of storage chips are generally connected to the control module in an array manner of a plurality of parallel channels, and read and write operations may be simultaneously performed. It may be understood that, in this embodiment of the present invention, accessing a non-volatile storage chip includes both reading from the non-volatile storage device and writing to the non-volatile storage device. FIG. 4 is an interaction flowchart of a method for reading from a non-volatile storage device 10 according to an embodiment of the present invention. As shown in FIG. 4, a procedure of reading, by the host 20, from the non-volatile storage device 10 specifically includes:
Step 401: The host 20 sends a first read request signal to the interface module 11.

Specifically, when the host 20 initiates a read request operation on the non-volatile storage device 10, the interface module 11 of the non-volatile storage device 10 receives, by using the memory interface, the first read request signal sent by the host 20. The first read request signal includes an address of the storage chip 14. The interface module 11 manages an address table, including a target address corresponding to existing data in the read cache 13. If data is read from the storage chip 14 and sent to the host 10, a backup may be provided in the read cache 13, and the address table is updated.

Optionally, before the host 20 sends the first read request signal to the interface module 11, the identification variable is set to 0.

Specifically, when the host 20 initiates read access, read access is successfully completed from the perspective of a memory interface time sequence. However, the host 20 does not know whether read data is correct. Therefore, the identification variable may be set to determine whether previous read access needs to be performed again. Before the host 20 sends the first read request signal, the identification variable may be set to 0.

Step 402: The interface module 11 determines whether data in the storage chip 14 corresponding to an address is stored in the read cache 13 of the non-volatile storage device 10.

If the data is already in the read cache 13, the interface module 11 directly reads the data from the read cache 13 and returns the data to the host by using the memory interface 30. If the data is not in the read cache 13, step 403 and step 404 are performed.

Step 403: The interface module 11 sends an instruction message to the control module 12.

Specifically, when the data requested by the host 20 is not in the read cache 13, the interface module 11 sends the instruction message to the control module 12. The instruction message instructs the control module 12 to read the data from the storage chip 14.

Optionally, the interface module 11 instructs the control module 12 to read the data from the storage chip 14 and stores the data in the read cache 13. In this way, the host 20 may read the required data from the read cache 13.

Step 404. The interface module 11 sends an interrupt signal to the host 20.

Specifically, when the data requested by the host 20 is not in the read cache 13, the interface module 11 sends the interrupt signal to the host 20 before a current read operation period ends. According to an instruction of the interrupt signal, the host 20 immediately enters an interrupt handler after the current read operation period ends, determines a delay time in the interrupt handler, and delays according to the delay time. Because the host 20 receives, before the current read operation period ends, the interrupt signal sent by the interface module 11, the host 20 does not continue to execute a subsequent instruction after the read period ends, but instead, immediately responds to the interrupt signal to enter the interrupt handler.

In this way, the interface module 11 sends the interrupt signal, so that the host 20 enters the interrupt handler to wait for correct data, thereby preventing the host 20 from obtaining incorrect data to perform a subsequent operation.

Step 405. The interface module 11 sends predetermined data to the host 20.

The predetermined data is used to cause the host 20 to end the current read operation period. To be specific, the read operation period starts from a time at which the host 20 sends the first read request signal to a time at which the host 20 receives the predetermined data sent by the interface module 11 and the memory interface recovers an idle state. The predetermined data may include data that can succeed in parity check by the host 20 and a parity check code of the data.

Because the host 20 can respond to the interrupt signal only after execution of an instruction is completed, the interface module 11 may send the predetermined data to the host 20, so that the host 20 completes the current instruction to respond to the interrupt signal and enter the interrupt handler. For example, the interface module 11 may send the predetermined data to the host 20 within preset duration after 404. If there is an ECC function, a correct ECC parity check code may be further included, so that the host 20 may immediately enter the interrupt handler after completing the current instruction, that is, ending the read operation. The host 20 initiates repeated read access again after exiting the interrupt handler, to obtain the data requested by the host 20.

A moment at which the interface module 11 sends the interrupt signal to the host 20 is before the current read operation period of the memory interface 30 ends, so that the host 20 immediately enters the interrupt handler after the current read operation period ends. Otherwise, the host 20 continues to execute a subsequent instruction and uses incorrect data. If an interrupt occurs when a processor of the host 20 executes an instruction, the processor of the host 20 responds to the interrupt after the execution of the instruction is completed, that is, jumps to the interrupt handler for execution, exits the interrupt after the execution of the instruction is completed, and continues to execute an instruction that is after the instruction.

For example, it is assumed that the processor of the host 20 needs to execute the following code:
mov ax, bx: indicating that content of a bx register is copied to an ax register; and
add ax, 2: indicating that 2 is added to content of an ax register.

If an interrupt is generated in a process of executing a first instruction, the host 20 continues to execute the first instruction, and does not immediately respond to the interrupt. Only after the execution is completed, the host 20 makes a response and enters the interrupt handler, and then continues to execute a second instruction after returning from the interrupt handler. The first instruction may be considered that the host 20 reads data from the non-volatile storage device 10. The memory interface 30 of the non-volatile storage device 10 has a read operation period, and the execution of the first instruction is completed after the period ends. The host 20 continues to execute the second instruction, and the second instruction is performing an operation by using the data. If an interrupt is generated at an improper moment, for example, if an interrupt is generated after the read operation period of the memory interface 30 already ends, the processor has started to execute the second instruction, and does not respond to the interrupt unless the execution of the instruction is completed. In this case, the host 20 uses the incorrect data.

Similar to the memory module, the non-volatile storage device 10 also has an EEPROM, configured to store parameters such as a column address strobe latency (Column Address Strobe Latency, "CAS Latency" for short) (indicating a time that the host 20 waits for before starting to receive data after sending the address, used in a read operation), a burst length (Burst Length), and a memory row address transmission to column address transmission delay (Row Address Strobe (Row Address Strobe, "RAS" for short) to Column Address Strobe (Column Address Strobe, "CAS" for short) delay, "tRCD" for short) (indicating a time that the host 20 waits for before starting to send data after initiating a write operation) that can be supported by the EEPROM. The host 20 reads these parameters by using a BIOS during startup and configures the non-volatile storage device 10. Therefore, the non-volatile storage device 10 can learn duration of a read/write operation, that is, a length of a read/write access period, to control a time at which the interrupt signal is sent.

It should be understood that, when the data requested by the host 20 is not stored in the read cache 13, the interface module 11 sends the instruction message to the control module 12 and sends the interrupt signal to the host 20. In the present invention, a sequence of "sending the instruction message to the control module 12" in step 403 and "sending the interrupt signal to the host 20" in step 404 is not limited. However, the interface module 11 first sends the instruction message to the control module 12, and then sends the interrupt signal to the host 20, that is, first performs step 403 and then performs step 404, so that the control module 12 can read the data from the storage chip 14 as soon as possible.

Optionally, the interface module 11 sends the interrupt signal to the host 20 by using an ALERT# pin or an EVENT# pin.

Step 406. The host 20 performs an interrupt handler.

Specifically, the non-volatile storage device 10 sends the interrupt signal to the host 20 to instruct the host 20 to execute the interrupt handler. After receiving the interrupt signal, the host 20 receives the predetermined data to end the current read operation period, to immediately respond to the interrupt signal, execute the interrupt handler, determine the delay time in the interrupt handler, and delay by a corresponding time to wait for correct data. This prevents the host 20 from obtaining incorrect data to perform subsequent processing. The host 20 initiates repeated read access again after exiting the interrupt handler, to obtain the requested data.

When the host 20 initiates the read operation on the non-volatile storage device 10, the storage chip 14 may be performing a read operation, a write operation, or an erasure operation, and cannot perform the read operation at this time. Alternatively, the storage chip 14 may be in the idle state, and can immediately perform the read operation. As clearly specified in device materials of the storage chip 14, when the storage chip 14 is in the write operation state, it may need to take hundreds of microseconds to end the state, and when the storage chip 14 is in the erasure state, it may need to take several milliseconds to complete the state. The host 20 may determine a fixed time period as the delay time. For example, the fixed time period may be a delay time corresponding to a most time-consuming operation.

Optionally, the host 20 may delay differently according to these different cases, and determine a proper delay time. In this way, the non-volatile storage device instructs the host to delay by different periods according to the different working states of the storage chip, so that an unnecessary delay is avoided, and data read efficiency is improved.

The host 20 may determine the delay time of the interrupt handler in the following manners.

Optionally, the interface module 11 includes a delay time register, and the host 20 obtains the delay time from the delay time register.

Specifically, a delay time register of the storage chip 14 may be defined in the interface module 11. The interface module 11 automatically determines the corresponding delay time according to state information of the storage chip 14 that is sent by the control module 15. For example, when the storage chip 14 is idle, the delay time may be set to 100 microseconds. When the storage chip 14 is in the write state, the delay time may be set to 500+100=600 microseconds (this is because the write operation ends after waiting for 500 microseconds, and it further needs to take 100 microseconds to read the data). When the storage chip 14 is in the erasure state, the delay time may be set to 2+0.1=2.1 milliseconds (this is because the erasure operation ends after waiting for 2 milliseconds, and it further needs to take 100 microseconds to read the data). The host 20 may obtain the delay time and then directly delay by a corresponding time according to an instruction of the interrupt signal.

Optionally, an I2C bus of the non-volatile storage device 10 is connected to a GPIO chip, and the host 20 determines the delay time according to the GPIO chip.

Specifically, the I2C bus of the non-volatile storage device 10 may be connected to a GPIO chip, and the chip is connected to the interface module 11 or the control module 12. The interface module 11 or the control module 12 may transfer a current status of the storage chip 14 or a required delay time to the GPIO chip. The host 20 may access the GPIO chip in the interrupt handler by using the I2C bus, to obtain the current status of the storage chip 14 or the required delay time. The host 20 may obtain the delay time, and then delay by a corresponding time according to delay time information. Alternatively, the host 20 may obtain state information of the storage chip 14, determine a required delay time according to the state information, and then delay by a corresponding time according to the determined delay time. In consideration that the I2C bus has a relatively slow speed, for example, when a frequency is 400 KHz, each clock period has 2.5 microseconds, and about 36 clock periods, that is, about 90 microseconds are required to read the data once. This duration should be subtracted from the actual delay time of the host 20.

Optionally, the interface module 11 includes a first status register, and the first status register indicates the current status of the storage chip 14. The host 20 determines the delay time according to the status of the storage chip 14 that is indicated by the first status register.

Specifically, the first status register may be defined in the interface module 11, and the host 20 may determine the delay time by reading from the first status register in the interrupt handler. The first status register indicates the current status of the storage chip 14. The state may include the idle state, the read state, the write state, and the erasure state. When determining that the read cache 13 does not include the data needed by the host, the interface module 11 sends an address in a first read request message to the control module 12. Because the control module 12 specifically performs a read/write operation and an erasure operation of the storage chip 14, the control module 12 knows a status of the storage chip 14 corresponding to the address. The control module 12 sends state information to the interface module 11, and the interface module 11 indicates the information in the first status register. For example, the state information may be defined as follows: 00 indicates that the storage chip 14 is idle, 01 indicates that the storage chip 14 is in the write state, and 10 indicates that the storage chip 14 is in the erasure state. Then, the host 20 determines the corresponding delay time according to the current status of the storage chip 14. A delay for the idle state may be dozens of microseconds, a delay for the write operation may be hundreds of microseconds, and a delay for the erasure operation may be several milliseconds. Finally, the host 20 starts to delay by a corresponding time according to the determined delay time.

Optionally, the I2C bus of the non-volatile storage device is connected to an EEPROM chip. The EEPROM chip stores a correspondence between the status of the storage chip 14 and the delay time. The host 20 determines the delay time according to the first status register and the EEPROM chip.

Specifically, an I2C bus exists between the non-volatile storage device 10 and the host 20, and is configured to connect to an EEPROM chip on the non-volatile storage device. The chip stores some specification parameters of the non-volatile storage device. For example, the parameters may be an interface type, a capacity, a factory name, and a time sequence parameter. New content such as the correspondence between the status of the storage chip 14 and the delay time may be added to the EEPROM chip. The host 20 may obtain the state information of the storage chip 14 from the interface module 11, and then delay by a corresponding time according to the state information in the interface module and the correspondence in the EEPROM chip when delay is needed.

After the host 20 enters the interrupt handler, and before the host 20 delays correspondingly according to the determined delay time, the method may further include: determining, by the host 20, a source of the interrupt.

Specifically, sources of the interrupt received by the host 20 may be divided into two types. If the interrupt is caused because an error occurs in parity check of an address signal or a command signal or a temperature exceeds a threshold, the host reports an alarm. For the former, the host generally restarts. For the latter, the host adjusts a rotation speed of a system fan. If the cause does not belong to the two cases, the cause is a delay request. The host 20 may start to delay by a corresponding time according to the delay time. The host 20 determines whether a received interrupt signal is an interrupt signal that instructs the host 20 to delay. When determining that the received interrupt signal instructs the host 20 to delay, the host 20 determines the delay time according to delay indication information sent by the interface module 11, or delays by a corresponding time according to the delay time already determined.

It should be noted that, if the non-volatile storage device 10 sends the interrupt signal by using an ALERT# pin, the host 20 may determine, in the interrupt handler, whether an error occurs in parity check of address and control signals of the memory interface 30 or the interrupt is caused because the non-volatile storage device 10 sends a delay request. If the non-volatile storage device 10 sends the interrupt signal by using an EVENT# pin, the host 20 may determine whether a temperature exceeds a threshold or the interrupt is caused because the non-volatile storage device 10 sends a delay request. The same ALERT# pin or the same EVENT# pin of the non-volatile storage device 10 is reused for various interrupt sources. Therefore, distinguishing and corresponding processing may be performed in the interrupt handler. If an error occurs in parity check of the address and control signals of the memory interface 30 or the temperature exceeds the threshold, these cases are faults, and the host 20 reports an alarm. If the non-volatile storage device 10 sends a delay request, the host 20 needs to delay in the interrupt handler.

In this way, the host ensures accurate execution of the interrupt handler by determining different interrupt causes. The host 20 may determine an interrupt source in the following manner.

Optionally, the I2C bus of the non-volatile storage device 10 is connected to a temperature sensor, and the host 20 determines an interrupt source by using the temperature sensor.

Specifically, the host 20 may read from the temperature sensor in the interrupt handler by using the I2C bus, and determine whether a temperature of the non-volatile storage device 10 exceeds a threshold. If the temperature does not exceed the threshold, it indicates that the interrupt signal is a signal that instructs the host 20 to delay.

Optionally, the interface module 11 includes a second status register, and the host 20 determines an interrupt source by using the second status register.

Specifically, the second status register may be defined in the interface module 11, and the host 20 may determine a source of the interrupt signal according to the second register. The second status register may include three bits, and a valid value is 1. A first bit may be used to indicate whether the temperature exceeds the threshold, a second bit may be used to indicate whether an error occurs in parity check of the address signal and the control signal, and a third bit may be used to indicate whether the required data can be returned within the current bus period, that is, whether delay is needed. The host 20 directly reads from the status register, and can determine, according to the second status register, whether delay is needed. The second register may alternatively include two bits that respectively indicate whether the temperature exceeds the threshold and whether an error occurs in parity check of the address signal and the control signal. The host 20 reads from the status register, and when the temperature does not exceed the threshold and no error occurs in parity check of the address signal and the control signal, may determine that delay is needed in the interrupt handler. Specific meaning of each bit of the second register is not limited in the present invention. For example, the first bit may be alternatively used to indicate whether an error occurs in parity check of the address and control signals, and the second bit may be alternatively used to indicate whether the temperature exceeds the threshold.

After the host determines, during determining of an interrupt source, that the interrupt signal received from the interface module 11 is an interrupt signal that instructs the host 20 to delay in the interrupt handler, the host 20 determines the delay time according to delay indication information sent by the interface module 11, or starts to delay by a corresponding time according to the delay time already determined.

Optionally, the method for reading from the non-volatile storage device 10 further includes: when the host 20 delays in the interrupt handler according to an instruction of the interrupt signal, setting the identification variable to 1; after the host 20 exits the interrupt handler, determining a value of the identification variable; and when the identification variable is 0, continuing, by the host 20, to execute a subsequent instruction; or when the identification variable is 1, sending, by the host 20, a same read request signal to the interface module 11.

Specifically, in the interrupt handler, the host 20 may reset the identification variable to 1, to indicate that the data requested by the host 20 is not in the read cache 13 and therefore the interrupt handler is entered, where the identification variable is set to 0 before the first read request signal is sent to the interface module 11.

After receiving data sent by the non-volatile storage device 10, the host 20 does not know whether the data is the data requested by the host 20, or the predetermined data sent by the interface module 11, or other data. Therefore, the value of the identification variable needs to be determined. After exiting the interrupt handler, the host 20 determines the value of the identification variable. If the identification variable is 1, it indicates that the host executes the interrupt handler just recently, and the received data may be the predetermined data sent by the interface module 11. Therefore, after the interrupt handler ends, the host 20 may send the same read request to the non-volatile storage device 10 again, that is, 409 is performed, to request to obtain the required data. If the identification variable is 0, it indicates that the data obtained by the host 20 is the data requested by the host 20, and a subsequent instruction may continue to be executed.

Therefore, the method for reading from the non-volatile storage device in this embodiment of the present invention learns, by setting the identification variable, whether read access is normally completed and whether read access needs to be initiated again, thereby avoiding a data error.

The non-volatile storage device 10 may perform step 407 and step 408 while step 406 is performed.

Step 407. The control module 12 reads the data from the storage chip 14.

Specifically, the host 20 delays by a fixed time period in the interrupt handler, so that the requested data is read from the storage chip 14. For example, while 406 is performed, the control module 12 may read, from the storage chip 14 according to an instruction of the interface module 11, the data requested by the host 20. The storage chip 14 has a chip address and the read request signal sent by the host 20 to the interface module 11 of the non-volatile storage device 10 includes the address of the storage chip 14, so that the control module 12 may read, from the storage chip 14 according to the address, the data requested by the host 20.

Step 408. The control module 12 stores the data read from the storage chip 14 in the read cache 13.

Specifically, while the host 20 executes the interrupt handler, the non-volatile storage device 10 may prepare the to-be-read data. After reading the data from the storage chip 14, the control module 12 may store the data in the read cache 13. In this way, when the host 20 initiates repeated access again, the data that needs to be read is already prepared in the cache 13, and delay no longer needs to be continued.

Therefore, in the method for reading from the non-volatile storage device in this embodiment of the present invention, the data of the storage chip is stored in the read cache while the host delays, to prevent the host from continuing to delay when initiating repeated access again, and improve read efficiency.

Step 409: The host 20 sends a second read request signal to the interface module 11.

Specifically, after the read operation period of the first read request signal ends, the host 20 executes the interrupt handler. The host 20 delays in the interrupt handler, so that the control module 12 reads, from the storage chip 14 within the time, the data requested by the host 20. The delay time obtained by the host 20 may be determined by the non-volatile storage device 10 according to the current status of the storage chip 14 and a data processing speed thereof. Therefore, after exiting the interrupt handler, the host 20 needs to initiate the same read request operation on the non-volatile storage device 10 again, to obtain the requested correct data.

The host 20 sends the second read request signal to the interface module 11, to obtain the data sent by the interface module 11 in 411, and the second read request signal includes the address of the storage chip 14.

It should be noted that the second read request signal and the first read request signal that is sent by the host 20 in step 401 request the same data.

It may be understood that, after receiving the second read request signal sent by the host 20, the interface module 11 may determine whether the data requested by the second read request signal is already stored in the read cache 13. If the data is already in the read cache 13, the interface module 11 directly reads the data from the read cache 13 and returns the data to the host by using the memory interface 30. If the control module 12 has no sufficient time to complete reading the data from the storage chip 14 due to a reason such as an insufficient delay time, the data requested by the second read request signal is not in the read cache 13. In this case, the interface module 11 may instruct the host 20 to perform the foregoing steps again, until the control module 12 completes reading the data from the storage chip 14.

Step 410. The read cache 13 sends the data requested by the host 20 to the interface module 11.

Specifically, after the interface module 11 receives the second read request signal sent by the host 20, because the control module 12 already stores the data read from the storage chip 14 in the read cache 13, the read cache 13 may send the stored data to the interface module 11, so that the interface module 11 may return the data to the host 20.

Step 411. The interface module 11 sends the data to the host 20.

Specifically, when the host 20 sends the second read request signal to the interface module 11 to request the data, the interface module 11 sends, to the host 20 by using the memory interface 30, the data read and stored in the read cache 13 by the control module 12.

Therefore, in the method for reading from the non-volatile storage device in this embodiment of the present invention, when the host initiates a read operation on the non-volatile storage device by using the memory interface, but the non-volatile storage device cannot return data in a timely manner, the non-volatile storage device sends the interrupt signal to the host, so that the host enters the interrupt handler to wait for correct data, thereby preventing the host from obtaining incorrect data to perform subsequent processing.

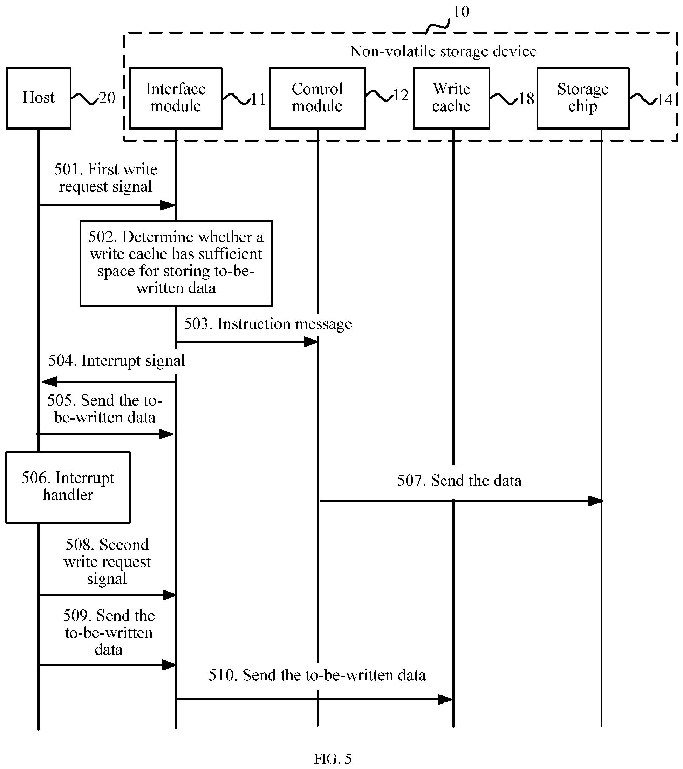

FIG. 5 is an interaction flowchart of a method for writing to a non-volatile storage device 10 according to an embodiment of the present invention. As shown in FIG. 5, a procedure of writing, by the host 20, to the non-volatile storage device 10 specifically includes the following steps.

Step 501: The host 20 sends a first write request signal to the interface module 11.

Specifically, when the host 20 initiates a write operation request to the non-volatile storage device 10 to write data, the interface module 11 of the non-volatile storage device 10 receives, by using the memory interface, the first write request signal sent by the host 20.

Optionally, before the host 20 sends the first write request signal to the interface module 11, the identification variable is set to 0.

Specifically, when the host 20 initiates write access, read access is successfully completed from the perspective of a memory interface time sequence. However, the host 20 does not know whether written data is stored by the non-volatile storage device 10. Therefore, the identification variable may be set to determine whether previous write access needs to be performed again. Before the host 20 sends the first write request signal, the identification variable may be set to 0.

Step 502. The interface module 11 determines whether the write cache 18 has sufficient space for storing to-be-written data.

When the host 20 initiates a write operation on the non-volatile storage device 10, because the non-volatile storage device 10 has no sufficient time to write, to the storage chip 14 in a timely manner, the data that the host 20 requests to write, the non-volatile storage device 10 generally first stores the to-be-written data in the write cache 18 of the non-volatile storage device 10, and subsequently writes the data to the storage chip 14. However, when an amount of the to-be-written data is very large, the write cache 18 may have no sufficient space for storing the data received from the memory interface 30. In this case, similar to the read operation, a delay policy is also needed.

After receiving, from the memory interface 30, a valid write signal sent by the host 20, the interface module 11 of the non-volatile storage device 10 determines that the current operation is a write operation, and determines whether the write cache 18 has sufficient space for storing the to-be-written data. If the write cache 18 has sufficient space for storing the to-be-written data, the to-be-written data is stored in the write cache 18 of the non-volatile storage device 10. If the write cache has insufficient space and cannot store the to-be-written data, the interface module 11 discards the data and step 503 and step 504 are performed.

Step 503: The interface module 11 sends an instruction message to the control module 12.

Specifically, when the write cache 18 has no sufficient space for storing the data that the host requests to write, the interface module 11 sends the instruction message to the control module 12, to instruct the control module 12 to store, in the storage chip 14, data currently stored by the write cache 18, thereby reserving sufficient space for storing the to-be-written data.

Step 504. The interface module 11 sends an interrupt signal to the host 20.

Specifically, when the write cache 18 has no sufficient space for storing the data that the host 20 requests to write, the interface module 11 sends the interrupt signal to the host 20 before a current write operation period ends. According to an instruction of the interrupt signal, the host 20 immediately enters an interrupt handler after the current write operation period ends, determines a delay time in the interrupt handler, and delays according to the delay time. Because the host 20 receives, before the current write operation period ends, the interrupt signal sent by the interface module 11, the host 20 does not continue to execute a subsequent instruction after the write period ends, and immediately responds to the interrupt signal to enter the interrupt handler.

Therefore, the interface module 11 sends the interrupt signal, so that the host 20 enters the interrupt handler to wait for the write cache 18 to reserve space for storing the to-be-written data, thereby avoiding data loss.

Step 505: The host 20 sends, to the interface module 11, the data that the host 20 requests to write.

After the host 20 sends all the to-be-written data to the interface module 11, and the memory interface 30 recovers an idle state, the host completes the current write request period. To be specific, the write operation period starts from a time at which the host 20 sends the first write request signal to a time at which the interface module 11 receives all the to-be-written data sent by the host 20 and the memory interface recovers the idle state.

Because the host 20 can respond to the interrupt signal only after execution of an instruction is completed, the host 20 sends all the to-be-written data to the interface module 11, so that the host 20 completes the current instruction to respond to the interrupt signal and enter the interrupt handler. For example, the host 20 may send the to-be-written data to the interface module 11 within preset duration after 504. Therefore, after the interface module 11 receives the data, the host 20 completes the current instruction, that is, ends the write operation. Then, the host 20 may immediately enter the interrupt handler. The host 20 initiates repeated write access again after exiting the interrupt handler, to store, in the non-volatile storage device 10, the data that the host 20 requests to write.

A moment at which the interface module 11 sends the interrupt signal to the host 20 is before the current write operation period of the memory interface 30 ends, so that the host 20 immediately enters the interrupt handler after the current write operation period ends. Otherwise, the host 20 continues to execute a subsequent instruction and causes data loss. If an interrupt occurs when a processor of the host 20 executes an instruction, the processor of the host 20 responds to the interrupt after the execution of the instruction is completed, that is, jumps to the interrupt handler for execution, exits the interrupt after the execution of the instruction is completed, and continues to execute an instruction that is after the instruction.

For example, if an interrupt is generated in a process of executing a first instruction, the host 20 continues to execute the first instruction, and does not immediately respond to the interrupt. Only after the execution is completed, the host 20 makes a response and enters the interrupt handler, and then continues to execute a second instruction after returning from the interrupt handler. The first instruction may be considered that the host 20 writes data to the non-volatile storage device 10. In this case, the memory interface 30 of the non-volatile storage device 10 has a write operation period, and the execution of the first instruction is completed after the period ends. The host 20 continues to execute the second instruction. If an interrupt is generated at an improper moment, for example, if an interrupt is generated after the write operation period of the memory interface 30 already ends, the processor has started to execute the second instruction, and does not respond to the interrupt unless the execution of the instruction is completed. In this case, the data written by the host 20 is discarded because the write cache 18 has no sufficient space for storage, but the host 20 does not know this.

It should be understood that, when the write cache 18 has no sufficient space for storing the data that the host 20 requests to write, the interface module 11 sends the instruction message to the control module 12 and sends the interrupt signal to the host 20. In the present invention, a sequence of "sending the instruction message to the control module 12" in step 503 and "sending the interrupt signal to the host 20" in step 504 is not limited. However, the interface module 11 first sends the instruction message to the control module 12, and then sends the interrupt signal to the host 20, that is, first performs step 503 and then performs step 504, so that the control module 12 can store the data already existing in the write cache 18 in the storage chip 14 as soon as possible.

Optionally, the interface module 11 sends the interrupt signal to the host 20 by using an ALERT# pin or an EVENT# pin of the non-volatile storage device 10.

Step 506. The host 20 performs an interrupt handler.

Specifically, the non-volatile storage device 10 sends the interrupt signal to the host 20 to instruct the host 20 to execute the interrupt handler. The host 20 completes sending all the to-be-written data to the interface module 11 to end the current write operation period, then immediately responds to the interrupt signal to execute the interrupt handler, determines the delay time in the interrupt handler, and delays by a corresponding time, to wait for the write cache 18 to reserve sufficient space for the host 20 to store the data that the host 20 requests to write, thereby avoiding data discarding. The host 20 initiates repeated write access again after exiting the interrupt handler, to request to write data to the non-volatile storage device 10.

Similar to the read operation, when the host 20 initiates the write operation on the non-volatile storage device 10, the storage chip 14 may be performing a read operation, a write operation, or an erasure operation, and cannot perform the write operation at this time. Alternatively, the storage chip 14 may be in the idle state, and can immediately perform the write operation. As clearly specified in device materials of the storage chip 14, when the storage chip 14 is in the write operation state, it may need to take hundreds of microseconds to end the state, and when the storage chip 14 is in the erasure state, it may need to take several milliseconds to complete the state. The host 20 may determine a fixed time period as the delay time. For example, the fixed time period may be a delay time corresponding to a most time-consuming operation.

Optionally, the host 20 may delay differently according to these different cases, and determine a proper delay time. In this way, the non-volatile storage device instructs the host to delay by different periods according to the different working states of the storage chip, so that an unnecessary delay is avoided, and data write efficiency is improved.

It may be understood that, for a method used by the host 20 to determine the delay time of the interrupt handler, refer to the various manners of determining the delay time by the host 20 in FIG. 4. For conciseness, details are not described herein again.

After the host 20 enters the interrupt handler, and before the host 20 delays according to the delay time, the method may further include: determining, by the host 20, a source of the interrupt.

Specifically, sources of the interrupt received by the host 20 may be divided into two types. If the interrupt is caused because an error occurs in parity check of an address signal or a command signal or a temperature exceeds a threshold, the host reports an alarm. For the former, the host generally restarts. For the latter, the host adjusts a rotation speed of a system fan. If the cause does not belong to the two cases, the cause is a delay request. The host 20 may start to delay by a corresponding time according to the delay time. The host 20 determines whether a received interrupt signal is an interrupt signal that instructs the host 20 to delay. When determining that the received interrupt signal instructs the host 20 to delay, the host 20 determines the delay time according to delay indication information sent by the interface module 11, or delays by a corresponding time according to the delay time already determined.

It should be noted that, if the non-volatile storage device 10 sends the interrupt signal by using an ALERT# pin, the host 20 may determine, in the interrupt handler, whether an error occurs in parity check of address and control signals of the memory interface 30 or the interrupt is caused because the non-volatile storage device 10 sends a delay request. If the non-volatile storage device 10 sends the interrupt signal by using an EVENT# pin, the host 20 may determine whether a temperature exceeds a threshold or the interrupt is caused because the non-volatile storage device 10 sends a delay request. The same ALERT# pin or the same EVENT# pin of the non-volatile storage device 10 is reused for various interrupt sources. Therefore, distinguishing and corresponding processing may be performed in the interrupt handler. If an error occurs in parity check of the address and control signals of the memory interface 30 or the temperature exceeds the threshold, these cases are faults, and the host 20 reports an alarm. If the non-volatile storage device 10 sends a delay request, the host 20 needs to delay in the interrupt handler.

In this way, the host 20 ensures accurate execution of the interrupt handler by determining different interrupt causes.

It may be understood that, for a method used by the host 20 to determine an interrupt source, refer to the various methods used by the host 20 to determine an interrupt source in FIG. 4. For conciseness, details are not described herein again.

After the host determines, during determining of an interrupt source, that the interrupt signal received from the interface module 11 is an interrupt signal that instructs the host 20 to delay in the interrupt handler, the host 20 determines the delay time according to delay indication information sent by the interface module 11, or starts to delay by a corresponding time according to the delay time already determined.

Optionally, the method for writing to the non-volatile storage device further includes: when the host 20 delays in the interrupt handler according to an instruction of the interrupt signal, setting the identification variable to 1; after the host 20 exits the interrupt handler, determining a value of the identification variable; and when the identification variable is 0, continuing, by the host 20, to execute a subsequent instruction; or when the identification variable is 1, sending, by the host 20, a same write request signal to the interface module 11.

Specifically, in the interrupt handler, the host 20 may reset the identification variable to 1, to indicate that the write cache 18 of the non-volatile storage device 10 has no sufficient space for storing the to-be-written data and therefore the interrupt handler is entered, where the identification variable is set to 0 before the first write request signal is sent to the interface module 11.

After writing the data to the non-volatile storage device 10, the host 20 does not know whether the data is stored in the write cache 18 of the non-volatile storage device 10, or is discarded by the interface module 11. Therefore, the value of the identification variable needs to be determined. After exiting the interrupt handler, the host 20 determines the value of the identification variable. If the identification variable is 1, it indicates that the host executes the interrupt handler just recently, and the written data may be discarded by the interface module 11. In this case, after the interrupt handler is completed, the host 20 may send the same write request to the non-volatile storage device 10 again, that is, step 408 is performed, to request to write the data. If the identification variable is 0, it indicates that the data written by the host 20 is already stored in the write cache 18 of the non-volatile storage device 10, and a subsequent instruction can continue to be executed. Therefore, the method for writing to the non-volatile storage device in this embodiment of the present invention learns, by setting the identification variable, whether write access is normally completed and whether write access needs to be initiated again, thereby avoiding a data error.

The non-volatile storage device 10 may perform step 507 while step 506 is performed.

Step 507. The control module 12 stores data of the write cache 18 in the storage chip 14.

Specifically, the host 20 delays by a fixed time period in the interrupt handler, to wait for the write cache 18 to transfer the data already stored in the write cache 18 to the storage chip 14, thereby reserving space for storing the to-be-written data sent by the host 20. For example, the control module 12 may store the data of the write cache 18 in the storage chip 14 according to an instruction of the interface module 11 while step 506 is performed.

Step 508: The host 20 sends a second write request signal to the interface module 11.

Specifically, after the write operation period of the first write request signal ends, the host 20 executes the interrupt handler. The host 20 delays in the interrupt handler, so that the control module 12 stores the data of the write cache 18 in the storage chip 14 within the time, to reserve space of the write cache 18. The delay time obtained by the host 20 may be determined by the non-volatile storage device 10 according to the current status of the storage chip 14 and a data processing speed thereof. Therefore, after exiting the interrupt handler, the host 20 needs to initiate the same write request operation on the non-volatile storage device 10 again, to store the written data in the write cache 18.

It should be noted that the second write request signal and the first write request signal that is sent by the host 20 in step 501 request to write the same data.

It may be understood that, after receiving the second write request signal sent by the host 20, the interface module 11 may determine whether the write cache 18 has sufficient space for storing the to-be-written data. If the write cache 18 has sufficient space for storing the to-be-written data, the interface module 11 stores the to-be-written data in the write cache 18 of the non-volatile storage device 10. If not all the data of the write cache 14 is transferred to the storage chip 14 due to a reason such as an insufficient delay time, and remaining space of the write cache 14 is still insufficient for storing the to-be-written data sent by the host 20, the interface module 11 may instruct the host 20 to perform the foregoing steps again, until the write cache 18 has sufficient space for storing the data that the host 20 requests to write.

Step 509: The host 20 sends the to-be-written data to the interface module 11.

Specifically, after the interface module 11 receives the second write request signal sent by the host 20, because the data of the write cache 18 is already stored in the storage chip 14, the write cache 18 can have sufficient space for storing the data that the second write request signal requests to write.

Step 510. The interface module 11 stores the to-be-written data received from the host 20 in the write cache 18.

Therefore, in the method for writing to the non-volatile storage device in this embodiment of the present invention, when the host initiates a write operation on the non-volatile storage device by using the memory interface, but the non-volatile storage device has no sufficient space for storing the data, the non-volatile storage device sends the interrupt signal to the host, so that the host enters the interrupt handler to wait for space to store the data, thereby avoiding data loss.

In addition, because an interrupt is not generated by using a prior-art manner of returning incorrect data, but instead, an interrupt is generated by sending the interrupt signal to the host, this is applicable to both read and write.

It should be noted that, sequence numbers of the foregoing processes do not indicate an execution sequence, and an execution sequence of processes shall be determined according to functions and internal logic thereof, and shall constitute no limitation on an implementation process of the embodiments of the present invention.

FIG. 3 is a structural diagram of a non-volatile storage device 10 according to an embodiment of the present invention. The non-volatile storage device 10 is applicable to both a read operation and a write operation. As shown in FIG. 3, the non-volatile storage device 10 is connected to the host 20 by using the memory interface 30. The storage chip 14 is configured to store data. When the host 20 reads the data of the non-volatile storage device 10 by using the memory interface 30, the interface module 11 is configured to:
receive a first read request signal sent by the host 20, where the first read request signal includes an address of the storage chip 14;
when data requested by the first read request signal is not stored in the read cache 13, instruct the control module 12 to read the read data from the storage chip 14; and
before the host 20 ends a current read operation period, send an interrupt signal and predetermined data to the host 20, where the predetermined data is used to instruct the host 20 to end the current read operation period, and the first interrupt signal is used to instruct the host 20 to execute an interrupt handler after the read operation period.

Therefore, when the non-volatile storage device in this embodiment of the present invention receives a read operation initiated by the host by using the memory interface, but cannot return data in a timely manner, the non-volatile storage device sends the interrupt signal to the host, so that the host enters the interrupt handler to wait for correct data, thereby preventing the host from obtaining incorrect data to execute a subsequent instruction.

Optionally, in another embodiment, the control module 12 is configured to: read the data from the storage chip 14 according to an instruction of the interface module 11, and store the data in the read cache.

The interface module 11 is further configured to: after the host 20 exits the interrupt handler, receive a second read request signal sent by the host 20, where the second read request signal includes the address of the storage chip 14; and send the data stored in the read cache 13 by the control module 12 to the host 20.

Therefore, the non-volatile storage device in this embodiment of the present invention stores the data of the storage chip in the read cache while the host delays, to prevent the host from continuing to delay when initiating repeated access again, and improve read efficiency.

Optionally, the interrupt signal is used to instruct the host 20 to determine a delay time, so that the host 20 delays in the interrupt handler according to the delay time.

Specifically, when the host 20 initiates the read operation on the non-volatile storage device 10, the storage chip 14 may be in another operation state, and cannot perform the read operation at this time. Alternatively, the storage chip 14 may be in an idle state, and can immediately perform the read operation. Because the storage chip 14 requires different periods to end different states, the host 20 may delay differently according to different states of the storage chip 14, and determine a proper delay time.

In this way, the host 20 is instructed to delay by different periods according to different working states of the storage chip 14, so that an unnecessary delay is avoided, and data read efficiency is improved.

Optionally, in another embodiment, the interface module 11 includes a delay time register, and the interrupt signal is used to instruct the host 20 to obtain the delay time from the delay time register.

Optionally, in another embodiment, an inter-integrated circuit I2C bus of the non-volatile storage device 10 connects to a general-purpose input/output GPIO chip, and the interrupt signal is used to instruct the host 20 to determine the delay time according to the GPIO chip.

Optionally, in another embodiment, the interface module 11 includes a first status register, the interrupt signal is used to instruct the host 20 to determine the delay time according to the first status register, and the first status register is configured to indicate a status of the storage chip 14.

Optionally, in another embodiment, the interface module 11 includes a first status register, the first status register is configured to indicate a status of the storage chip 14, an I2C bus of the non-volatile storage device 10 connects to an electrically erasable programmable read-only memory EEPROM chip, the EEPROM chip is configured to indicate a correspondence between the status and the delay time, and the interrupt signal is used to instruct the host 20 to determine the delay time according to the first status register and the EEPROM chip.

Optionally, the status of the storage chip 14 includes: an idle state, a read state, a write state, and an erasure state.

Before delaying in the interrupt handler according to the delay time, the host 20 may further first determine a source of the interrupt signal. When determining that the received interrupt signal is an interrupt signal that instructs to delay, the host 20 determines the delay time according to delay indication information sent by the interface module 11, or delays by a corresponding time according to the delay time already determined.

In this way, the non-volatile storage device 10 instructs the host 20 to determine different interrupt causes. This ensures that the host 20 accurately executes the interrupt handler.

Optionally, in another embodiment, the interface module 11 includes a second status register, and the second status register is configured to instruct the host 20 to determine, according to the second status register, to delay in the interrupt handler.

Optionally, in another embodiment, the I2C bus of the non-volatile storage device 10 connects to a temperature sensor, and the second status register is configured to indicate that a temperature that is of the non-volatile storage device 10 and that is indicated by the temperature sensor does not exceed a threshold.

Optionally, in another embodiment, the second status register is configured to indicate that no error occurs in parity check of address and control signals of the memory interface 30.

Optionally, in an embodiment, the predetermined data includes data that can succeed in parity check by the host and a parity check code of the data.

The foregoing describes how the non-volatile storage device 10 in this embodiment of the present invention performs a read operation initiated by the host 20. The following describes a write operation. When the host 20 writes data to the non-volatile storage device 10 by using the memory interface 30, the interface module 11 is configured to:
receive a first write request signal sent by the host 20 and data that the first write request signal requests to write, where the first write request signal includes the address of the storage chip 14;
when the write cache 18 has no sufficient space for storing the to-be-written data, discard the data, and instruct the control module 12 to store data already existing in the write cache 18 in the storage chip 14; and
before the host 20 ends a current write operation period, send a second interrupt signal to the host 20, where the second interrupt signal is used to instruct the host 20 to execute the interrupt handler after the current write operation period.

Therefore, in the method for writing to the non-volatile storage device in this embodiment of the present invention, when the host initiates a write operation on the non-volatile storage device by using the memory interface, but the non-volatile storage device has no sufficient space for storing the data, the non-volatile storage device sends the interrupt signal to the host, so that the host enters the interrupt handler to wait for space to store the data, thereby avoiding data loss.

In addition, because an interrupt is not generated by using a prior-art manner of returning incorrect data, but instead, an interrupt is generated by sending the interrupt signal to the host, this is applicable to both read and write.

Optionally, in another embodiment, the control module 12 is configured to store the write data of the write cache 18 in the storage chip 14 according to an instruction of the interface module 11, so that the write cache 18 reserves sufficient space to store the data.

The interface module 11 is further configured to: after the host 20 exits the interrupt handler, receive a second write request signal sent by the host 20; and receive the to-be-written data sent by the host 20, and store the to-be-written data in the write cache 18.

Optionally, the interrupt signal is used to instruct the host 20 to determine a delay time, so that the host 20 delays in the interrupt handler according to the delay time.

Specifically, similar to the read operation, the storage chip 14 requires different periods to end different current states. Therefore, the non-volatile storage device 10 may instruct the host 20 to delay differently according to different states of the storage chip 14, and to determine a proper delay time. In this way, the host 20 is instructed to delay by different periods according to different working states of the storage chip 14, so that an unnecessary delay is avoided, and data read efficiency is improved.

Optionally, in another embodiment, the interface module 11 includes a delay time register, and the interrupt signal is used to instruct the host 20 to obtain the delay time from the delay time register.

Optionally, in another embodiment, an inter-integrated circuit I2C bus of the non-volatile storage device 10 connects to a general-purpose input/output GPIO chip, and the interrupt signal is used to instruct the host 20 to determine the delay time according to the GPIO chip.

Optionally, in another embodiment, the interface module 11 includes a first status register, the interrupt signal is used to instruct the host 20 to determine the delay time of the interrupt handler according to the first status register, and the first status register is configured to indicate a status of the storage chip 14.

Optionally, in another embodiment, the interface module 11 includes a first status register, the first status register is configured to indicate a status of the storage chip 14, an I2C bus of the non-volatile storage device 10 connects to an electrically erasable programmable read-only memory EEPROM chip, the EEPROM chip is configured to indicate a correspondence between the status and the delay time, and the interrupt signal is used to instruct the host 20 to determine the delay time according to the first status register and the EEPROM chip.

Optionally, the status of the storage chip 14 includes: an idle state, a read state, a write state, and an erasure state.

Similar to the read operation, before delaying according to the delay time, the host 20 may further first determine a source of the interrupt signal. When determining that the received interrupt signal is an interrupt signal that instructs to delay, the host 20 determines the delay time according to delay indication information sent by the interface module 11, or delays by a corresponding time according to the delay time already determined. In this way, the non-volatile storage device 10 instructs the host 20 to determine different interrupt causes. This ensures that the host 20 accurately executes the interrupt handler.

Optionally, in another embodiment, the interface module 11 includes a second status register, and the second status register is configured to instruct the host 20 to determine, according to the second status register, to delay in the interrupt handler.

Optionally, in another embodiment, the I2C bus of the non-volatile storage device 10 connects to a temperature sensor, and the second status register is configured to indicate that a temperature that is of the non-volatile storage device 10 and that is indicated by the temperature sensor does not exceed a threshold.

Optionally, in another embodiment, the second status register is configured to indicate that no error occurs in parity check of address and control signals of the memory interface 30.

When the non-volatile storage device 10 performs the read operation or the write operation, optionally, in an embodiment, the interface module 11 sends the interrupt signal to the host 20 by using an ALERT# pin or an EVENT# pin of the non-volatile storage device 10.

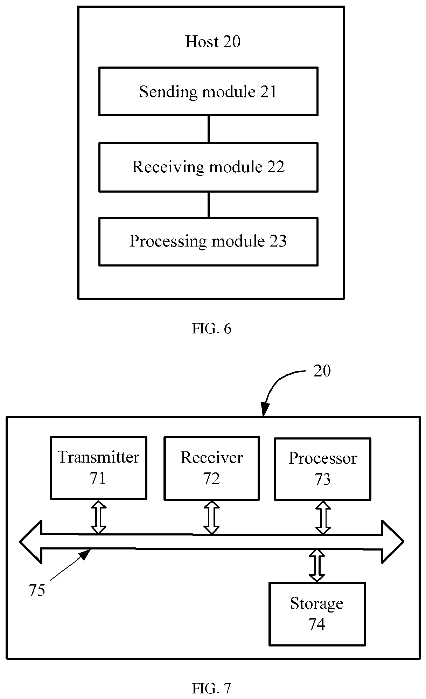

FIG. 6 is a structural diagram of a host 20 according to an embodiment of the present invention. The host 20 may simultaneously initiate a read operation and a write operation on the non-volatile storage device 10. The non-volatile storage device 10 includes the interface module 11, the control module 12, the read cache 13, the storage chip 14, and the write cache 18. As shown in FIG. 6, the host 20 includes a receiving module 21, a sending module 22, and a processing module 23. When the host 20 reads data in the non-volatile storage device 10 by using the memory interface 30:
the sending module 21 is configured to send a first read request signal to the interface module 11, where the first read request signal includes an address of the storage chip 14;
the receiving module 22 is configured to: before a current read operation period ends, receive an interrupt signal sent by the interface module 11, where the interrupt signal indicates that data requested by the read request signal is not stored in the read cache 13;
the receiving module 22 is further configured to receive predetermined data sent by the interface module 11; and
the processing module 23 is configured to: determine a delay time according to the interrupt signal received by the receiving module 11, and delay according to the delay time.

Therefore, when the host in this embodiment of the present invention initiates a read operation on the non-volatile storage device by using the memory interface, but the non-volatile storage device cannot return data in a timely manner, the host receives the interrupt signal sent by the non-volatile storage device, so that the host enters the interrupt handler to wait for correct data, preventing the host from obtaining incorrect data to perform a subsequent operation.

Optionally, in another embodiment, the sending module 21 is further configured to: after the interrupt handler is exited, send a second read request signal to the interface module 11.

The receiving module 22 is further configured to receive the data sent by the interface module 11.

When the host 20 initiates the read operation on the non-volatile storage device 10, the storage chip 14 may be in another operation state, and cannot perform the read operation at this time. Alternatively, the storage chip 14 may be in an idle state, and can immediately perform the read operation. Because the storage chip 14 requires different periods to end different states, the host 20 may delay differently according to different states of the storage chip 14, and determine a proper delay time. In this way, the host 20 delays by different periods according to different working states of the storage chip 14, so that an unnecessary delay is avoided, and data read efficiency is improved.

Optionally, in another embodiment, the processing module 23 is specifically configured to obtain the delay time of the interrupt handler from the delay time register of the interface module 11.

Optionally, in another embodiment, the processing module 23 is specifically configured to determine the delay time of the interrupt handler according to a general-purpose input/output GPIO chip connected to an inter-integrated circuit I2C bus of the non-volatile storage device 10.

Optionally, in another embodiment, the processing module 23 is specifically configured to determine the delay time according to the first status register of the interface module 11, where the first status register is configured to indicate a status of the storage chip 14.

Optionally, in another embodiment, the processing module 23 is specifically configured to determine the delay time of the interrupt handler according to the first status register included in the interface module 11 and the EEPROM chip connected to the I2C bus of the non-volatile storage device 10. The first status register is configured to indicate a status of the storage chip 14, and the EEPROM chip is configured to indicate a correspondence between the status and the delay time.

Optionally, the status of the storage chip 14 includes: an idle state, a read state, a write state, and an erasure state.

Before the host 20 delays in the interrupt handler according to the delay time, a preset condition may be further set. When the preset condition is satisfied, the host 20 determines the delay time according to delay indication information sent by the interface module 11, or delays by a corresponding time according to the delay time already determined. In this way, the preset condition is set to trigger the host 20 to delay, and it is ensured that the host 20 accurately executes the interrupt handler.

Optionally, in another embodiment, the processing module 23 is specifically configured to: when the preset condition is satisfied, determine the delay time of the interrupt handler.

Optionally, in another embodiment, the I2C bus of the non-volatile storage device 10 connects to a temperature sensor, and the preset condition includes: a temperature that is of a memory interface 30 and that is indicated by the temperature sensor does not exceed a threshold.

Optionally, in another embodiment, the interface module 11 includes a second status register, and the preset condition includes: the second status register indicates that the temperature that is of the memory interface 30 and that is indicated by the temperature sensor does not exceed a threshold.

Optionally, in another embodiment, the interface module 11 includes a second status register, and the preset condition includes: the second status register indicates that no error occurs in parity check of address and control signals of the memory interface 30.

Optionally, in another embodiment, the host 20 further includes a setting module 24. The setting module 24 is configured to: before the first read request signal is sent to the interface module, set an identification variable to 0; when the preset condition is satisfied, set the identification variable to 1; and after the host 20 exits the interrupt handler, determine a value of the identification variable; and when the identification variable is 0, instruct the host 20 to continue to execute a subsequent instruction; or when the identification variable is 1, instruct the sending module 22 to send the second read request signal to the interface module 11.

Therefore, the host in this embodiment of the present invention learns, by setting the identification variable, whether read access is normally completed and whether read access needs to be initiated again, thereby avoiding a data error.

The foregoing describes how the host 20 in this embodiment of the present invention performs the read operation. The following describes a write operation. When the host 20 writes data to the non-volatile storage device 10,
the sending module 21 is configured to send a first write request signal to the non-volatile storage device 10;
the receiving module 22 is configured to: before a current write operation period ends, receive an interrupt signal sent by the non-volatile storage device 10, where the interrupt signal indicates that a write cache 18 of the non-volatile storage device 10 has no sufficient space for storing to-be-written data;
the sending module 21 is further configured to send the to-be-written data to the interface module 11; and
the processing module 23 is configured to: end the current write operation period according to the to-be-written data sent by the sending module 21, and after the write operation period ends, execute an interrupt handler according to an instruction of the interrupt signal.

Therefore, when the host in this embodiment of the present invention initiates a write operation by using the memory interface, but the non-volatile storage device has no sufficient space for storing the data, the host receives the interrupt signal sent by the non-volatile storage device, so that the host enters the interrupt handler to wait for space to store the data, thereby avoiding data loss.

In addition, because an interrupt is not generated by using a prior-art manner of returning incorrect data, but instead, an interrupt is generated by sending the interrupt signal to the host, this is applicable to both read and write.

Optionally, in another embodiment, the sending module 21 is further configured to: after the interrupt handler is exited, send a second write request signal to the non-volatile storage device 10, and send the to-be-written data to the non-volatile storage device 10, so that the to-be-written data is stored in the write cache 18 of the non-volatile storage device 10.

Similar to the read operation, because the storage chip 14 requires different periods to end different current states, the host 20 may delay differently according to different states of the storage chip 14, and determine a proper delay time. In this way, the host 20 delays by different periods according to different working states of the storage chip 14, so that an unnecessary delay is avoided, and data read efficiency is improved.

Optionally, in another embodiment, the processing module 23 is specifically configured to obtain the delay time of the interrupt handler from the delay time register of the interface module 11.

Optionally, in another embodiment, the processing module 23 is specifically configured to determine the delay time of the interrupt handler according to a general-purpose input/output GPIO chip connected to an inter-integrated circuit I2C bus of the non-volatile storage device 10.

Optionally, in another embodiment, the processing module 23 is specifically configured to determine the delay time according to the first status register of the interface module 11, where the first status register is configured to indicate a status of the storage chip 14.

Optionally, in another embodiment, the processing module 23 is specifically configured to determine the delay time of the interrupt handler according to the first status register included in the interface module 11 and the electrically erasable programmable read-only memory EEPROM chip connected to the I2C bus of the non-volatile storage device 10. The first status register is configured to indicate a status of the storage chip 14, and the EEPROM chip is configured to indicate a correspondence between the status and the delay time.

Optionally, the status of the storage chip 14 includes: an idle state, a read state, a write state, and an erasure state.

Similar to the read operation, before delaying according to the delay time, the host 20 may further first determine a source of the interrupt signal. When determining that the received interrupt signal is an interrupt signal that instructs to delay, the host 20 determines the delay time according to delay indication information sent by the interface module 11, or delays by a corresponding time according to the delay time already determined. In this way, the host 20 ensures accurate execution of the interrupt handler by determining different interrupt causes.

Before the host 20 delays in the interrupt handler according to the delay time, a preset condition may be further set. When the preset condition is satisfied, the host 20 determines the delay time according to delay indication information sent by the interface module 11, or delays by a corresponding time according to the delay time already determined. In this way, the preset condition is set to trigger the host 20 to delay, and it is ensured that the host 20 accurately executes the interrupt handler.

Optionally, in another embodiment, the processing module 23 is specifically configured to: when the preset condition is satisfied, determine the delay time of the interrupt handler.

Optionally, in another embodiment, the I2C bus of the non-volatile storage device 10 connects to a temperature sensor, and the preset condition includes: a temperature that is of a memory interface 30 and that is indicated by the temperature sensor does not exceed a threshold.

Optionally, in another embodiment, the interface module 11 includes a second status register, and the preset condition includes: the second status register indicates that the temperature that is of the memory interface 30 and that is indicated by the temperature sensor does not exceed a threshold.

Optionally, in another embodiment, the interface module 11 includes a second status register, and the preset condition includes: the second status register indicates that no error occurs in parity check of address and control signals of the memory interface 30.

Optionally, in another embodiment, the host 20 further includes a setting module 24. The setting module 24 is configured to: before the first write request signal is sent to the interface module 11, set an identification variable to 0; when the preset condition is satisfied, set the identification variable to 1; and after the host 20 exits the interrupt handler, determine a value of the identification variable; and when the identification variable is 0, instruct the host 20 to continue to execute a subsequent instruction; or when the identification variable is 1, instruct the sending module 22 to send the second write request signal to the interface module 11.

Therefore, the host in this embodiment of the present invention learns, by setting the identification variable, whether write access is normally completed and whether write access needs to be initiated again, thereby avoiding a data error.

When the non-volatile storage device 10 performs the read operation or the write operation, optionally, in another embodiment, the receiving module 21 receives the interrupt signal sent by using an ALERT# pin or an EVENT# pin of the non-volatile storage device 10.

It should be noted that, in this embodiment of the present invention, the sending module 21 may be implemented by using a transmitter, the receiving module 22 may be implemented by using a receiver, and the processing module 23 may be implemented by using a processor. As shown in FIG. 7, the host 20 may include a transmitter 71, a receiver 72, a processor 73, and a storage 74. The storage 74 may be configured to store code executed by the processor 73 and the like. The processor 73 is configured to execute an instruction stored by the storage 74, to control the receiver 72 to receive a signal and control the transmitter 71 to send an instruction.

The components in the host 20 are coupled together by using a bus system 75, and the bus system 75 further includes a power supply bus, a control bus, and a state signal bus in addition to a data bus.

It may be clearly understood by a person skilled in the art that, for the purpose of convenient and brief description, for a detailed working process of the foregoing system, apparatus, and unit, refer to a corresponding process in the foregoing method embodiments, and details are not described herein.

It should be noted that the processor in this embodiment of the present invention may be an integrated circuit chip and is capable of signal processing. In an implementation process, steps in the foregoing method embodiments can be implemented by using a hardware integrated logical circuit in the processor, or by using instructions in a form of software. The processor may further be a general processor, a digital signal processor (Digital Signal Processing, DSP), an application-specific integrated circuit (Application Specific Integrated Circuit, ASIC), a field programmable gate array (Field Programmable Gate Array, FPGA), another programmable logic device, a discrete gate, a transistor logic device, or a discrete hardware component. All methods, steps, and logical block diagrams disclosed in this embodiment of the present invention may be implemented or performed. The general purpose processor may be a microprocessor or the processor may be any normal processor, or the like. Steps of the methods disclosed in the embodiments of the present invention may be directly performed and completed by a hardware decoding processor, or may be performed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor.

It should be noted that the non-volatile storage in the embodiments of the present invention may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. It should be noted that the storage of the system and the method described in this specification aims to include, but is not limited to, these and any other proper storages.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The foregoing descriptions are merely specific embodiments of the present invention, but are not intended to limit the protection scope of the present invention. Therefore, the protection scope of the present invention shall be subject to the protection scope of the claims.

## Claims

1. A non-volatile storage device (10), wherein the non-volatile storage device (10) comprises an interface module (11), a control module (12), a read cache (13), and a storage chip (14), and the interface module (11) is configured to:
• receive a first read request signal sent by a host, wherein the first read request signal comprises an address of the storage chip (14);
• when read data requested by the first read request signal is not stored in the read cache (13), instruct the control module (12) to read the read data from the storage chip (14); **characterized in that** the interface module is further configured to
send a first interrupt signal to the host to instruct the host to execute an interrupt handler after the read operation period; and
send predetermined data to the host to cause the host to end the read operation period.

2. The non-volatile storage device according to claim 1, wherein the control module is configured to:
read the read data from the storage chip according to an instruction of the interface module, and store the read data in the read cache; and
the interface module is further configured to:
receive a second read request signal sent by the host after exiting the interrupt handler, wherein the second read request signal comprises the address of the storage chip; and send the read data stored in the read cache by the control module to the host.

3. The non-volatile storage device according to claim 1 or 2, wherein the non-volatile storage device further comprises a write cache, and the interface module is further configured to:
receive a first write request signal sent by the host and write data that the first write request signal requests to write, wherein the first write request signal comprises the address of the storage chip;
when the write cache has no sufficient space for storing the write data, discard the write data, and instruct the control module to store data already existing in the write cache in the storage chip; and
send a second interrupt signal to the host to instruct the host to execute the interrupt handler after the current write operation period.

4. The non-volatile storage device according to claim 3, wherein the control module is further configured to:
store the data already existing in the write cache in the storage chip according to an instruction of the interface module, so that the write cache reserves sufficient space to store the write data; and
the interface module is further configured to:
receive a second write request signal sent by the host after exiting the interrupt handler; and
receive the write data sent by the host, and store the write data in the write cache.

5. The non-volatile storage device according to claim 3 or 4, wherein the first interrupt signal and/or the second interrupt signal is used to instruct the host to determine a delay time, so that the host delays in the interrupt handler according to the delay time.

6. The non-volatile storage device according to claim 5, wherein the interface module comprises a delay time register, and the first interrupt signal and/or the second interrupt signal is used to instruct the host to obtain the delay time from the delay time register.

7. The non-volatile storage device according to claim 5, wherein an inter-integrated circuit I2C bus of the non-volatile storage device connects to a general-purpose input/output GPIO chip, and the first interrupt signal and/or the second interrupt signal is used to instruct the host to determine the delay time according to the GPIO chip.

8. The non-volatile storage device according to claim 5, wherein the interface module comprises a first status register, the first interrupt signal and/or the second interrupt signal is used to instruct the host to determine the delay time according to the first status register, and the first status register is configured to indicate a status of the storage chip.

9. The non-volatile storage device according to claim 5, wherein the interface module comprises a first status register, the first status register is configured to indicate a status of the storage chip, an I2C bus of the non-volatile storage device connects to an electrically erasable programmable read-only memory, EEPROM, chip, the EEPROM chip is configured to indicate a correspondence between the status and the delay time, and the first interrupt signal and/or the second interrupt signal is used to instruct the host to determine the delay time according to the first status register and the EEPROM chip.

10. The non-volatile storage device according to any one of claims 1 to 9, wherein the interface module comprises a second status register, and the second status register is configured to instruct the host to determine, according to the second status register, to delay in the interrupt handler.

11. The non-volatile storage device according to claim 10, wherein the I2C bus of the non-volatile storage device connects to a temperature sensor, and the second status register is configured to indicate that a temperature of the non-volatile storage device that is indicated by the temperature sensor does not exceed a threshold.

12. The non-volatile storage device according to claim 10, wherein the non-volatile storage device connects to the host by using a memory interface, and the second status register is configured to indicate that no error occurs in parity check of address and control signals of the memory interface.

13. The non-volatile storage device according to any one of claims 1 to 12, wherein the storage chip comprises a flash memory chip, a phase change random access memory, or a resistive random access memory.

14. A method for accessing a non-volatile storage device (10), wherein the non-volatile storage device (10) comprises an interface module (11), a control module (12), a read cache (13), and a storage chip (14), and the method comprises:
• receiving, by the interface module (11), a first read request signal sent by a host, wherein the first read request signal comprises an address of the storage chip (14) (step 401);
• when read data requested by the first read request signal is not stored in the read cache (13), instructing, by the interface module (11), the control module (12) to read the read data from the storage chip (step 407); **characterized in that** the method further comprises
sending, by the interface module (11), a first interrupt signal to instruct the host to execute an interrupt handler after the read operation period; and
sending, by the interface module (11), predetermined data to the host (steps 404, 405) to cause the host to end the current read operation period.

15. The method according to claim 14, wherein the method further comprises:
reading, by the control module, the read data from the storage chip according to an instruction of the interface module, and storing the read data in the read cache;
receiving, by the interface module, a second read request signal sent by the host after exiting the interrupt handler, wherein the second read request signal comprises the address of the storage chip; and
sending, by the interface module, the read data stored in the read cache by the control module to the host.

## Patentansprüche

1. Nichtflüchtige Speichervorrichtung (10), wobei die nichtflüchtige Speichervorrichtung (10) ein Schnittstellenmodul (11), ein Steuermodul (12), einen Lesecache (13) und einen Speicherchip (14) umfasst und das Schnittstellenmodul (11) konfiguriert ist, um:
• ein von einem Host gesendetes erstes Leseanforderungssignal zu empfangen, wobei das erste Leseanforderungssignal eine Adresse des Speicherchips (14) umfasst;
• wenn die durch das erste Leseanforderungssignal angeforderten Lesedaten nicht im Lesecache (13) gespeichert sind, das Steuermodul (12) anzuweisen, die gelesenen Daten aus dem Speicherchip (14) zu lesen;
**dadurch gekennzeichnet, dass** das Schnittstellenmodul ferner konfiguriert ist, um ein erstes Interruptsignal an den Host zu senden, um den Host anzuweisen, einen Interrupthandler nach dem Lesevorgangszeitraum ausführen; und
vorbestimmte Daten an den Host zu senden, um den Host zu veranlassen, den Lesevorgangszeitraum zu beenden.

2. Nichtflüchtige Speichervorrichtung nach Anspruch 1, wobei das Steuermodul konfiguriert ist, um:
die Lesedaten aus dem Speicherchip gemäß einer Anweisung des Schnittstellenmoduls zu lesen und die Lesedaten in dem Lesecache zu speichern; und
das Schnittstellenmodul ferner konfiguriert ist, um:
ein zweites von einem Host gesendetes Leseanforderungssignal zu empfangen, nachdem der Interrupthandler beendet wurde, wobei das zweite Leseanforderungssignal die Adresse des Speicherchips umfasst; und die durch das Steuermodul im Lesecache gespeicherten Lesedaten an den Host zu senden.

3. Nichtflüchtige Speichervorrichtung nach Anspruch 1 oder 2, wobei die nichtflüchtige Speichervorrichtung ferner einen Schreibcache umfasst und das Schnittstellenmodul ferner konfiguriert ist, um:
ein von dem Host gesendetes erstes Schreibanforderungssignal zu empfangen und die Daten, die das erste Schreibanforderungssignal zum Schreiben anfordert, zu schreiben, wobei das erste Schreibanforderungssignal die Adresse des Speicherchips umfasst; wenn der Schreibcache keinen ausreichenden Platz zum Speichern der Schreibdaten hat, die Schreibdaten zu verwerfen und das Steuermodul anzuweisen, die bereits in dem Schreibcache vorhandenen Daten in dem Speicherchip zu speichern; und
ein zweites Interruptsignal an den Host zu senden, um den Host anzuweisen, den Interrupthandler nach dem aktuellen Schreibvorgangszeitraum auszuführen.

4. Nichtflüchtige Speichervorrichtung nach Anspruch 3, wobei das Steuermodul ferner konfiguriert ist, um:
die bereits in dem Schreibcache vorhandenen Daten gemäß einer Anweisung des Schnittstellenmoduls in dem Speicherchip zu speichern, sodass der Schreibcache ausreichend Platz zum Speichern der Schreibdaten reserviert; und
das Schnittstellenmodul ferner konfiguriert ist, um:
ein zweites von dem Host gesendetes Schreibanforderungssignal zu empfangen, nachdem der Interrupthandler beendet wurde; und
die von dem Host gesendeten Schreibdaten zu empfangen und die Schreibdaten in dem Schreibcache zu speichern.

5. Nichtflüchtige Speichervorrichtung nach Anspruch 3 oder 4, wobei das erste Interruptsignal und/oder das zweite Interruptsignal verwendet wird, um den Host anzuweisen, eine Verzögerungszeit zu bestimmen, sodass der Host in dem Interrupthandler gemäß der Verzögerungszeit verzögert.

6. Nichtflüchtige Speichervorrichtung nach Anspruch 5, wobei das Schnittstellenmodul ein Verzögerungszeitregister umfasst und das erste Interruptsignal und/oder das zweite Interruptsignal verwendet wird, um den Host anzuweisen, die Verzögerungszeit aus dem Verzögerungszeitregister zu erhalten.

7. Nichtflüchtige Speichervorrichtung nach Anspruch 5, wobei ein Bus einer interintegrierten Schaltung (Inter-Integrated Circuit, I2C) der nichtflüchtigen Speichervorrichtung mit einem Allzweckeingabe/-ausgabe (General-Purpose Input/Output, GPIO)-Chip verbunden ist und das erste Interruptsignal und/oder das zweite Interruptsignal verwendet wird, um den Host anzuweisen, die Verzögerungszeit gemäß dem GPIO-Chip zu bestimmen.

8. Nichtflüchtige Speichervorrichtung nach Anspruch 5, wobei das Schnittstellenmodul ein erstes Statusregister umfasst, das erste Interruptsignal und/oder das zweite Interruptsignal verwendet wird, um den Host anzuweisen, die Verzögerungszeit gemäß dem ersten Statusregister zu bestimmen, und das erste Statusregister konfiguriert ist, um einen Status des Speicherchips anzuzeigen.

9. Nichtflüchtige Speichervorrichtung nach Anspruch 5, wobei das Schnittstellenmodul ein erstes Statusregister umfasst, das erste Statusregister konfiguriert ist, um einen Status des Speicherchips anzuzeigen, ein I2C-Bus der nichtflüchtigen Speichervorrichtung mit einem Chip eines elektrisch löschbaren programmierbaren schreibgeschützten Speichers (Electrically Erasable Programmable Read-Only Memory, EEPROM) verbunden ist, der EEPROM-Chip konfiguriert ist, um eine Übereinstimmung zwischen dem Status und der Verzögerungszeit anzuzeigen, und das erste Interruptsignal und/oder das zweite Interruptsignal verwendet wird, um den Host anzuweisen, die Verzögerungszeit gemäß dem ersten Statusregister und dem EEPROM-Chip anzuzeigen.

10. Nichtflüchtige Speichervorrichtung nach einem der Ansprüche 1 bis 9, wobei das Schnittstellenmodul ein zweites Statusregister umfasst und das zweite Statusregister konfiguriert ist, um den Host anzuweisen, die Verzögerung in dem Interrupthandler gemäß dem zweiten Statusregister zu bestimmen.

11. Nichtflüchtige Speichervorrichtung nach Anspruch 10, wobei der I2C-Bus der nichtflüchtigen Speichervorrichtung mit einem Temperatursensor verbunden ist und das zweite Statusregister konfiguriert ist, um anzuzeigen, dass eine Temperatur der nichtflüchtigen Speichervorrichtung, die durch den Temperatursensor angezeigt wird, keinen Schwellwert überschreitet.

12. Nichtflüchtige Speichervorrichtung nach Anspruch 10, wobei die nichtflüchtige Speichervorrichtung unter Verwendung einer Speicherschnittstelle mit dem Host verbunden ist und das zweite Statusregister konfiguriert ist, um anzuzeigen, dass bei der Paritätsprüfung von Adress- und Steuersignalen der Speicherschnittstelle kein Fehler auftritt.

13. Nichtflüchtige Speichervorrichtung nach einem der Ansprüche 1 bis 12, wobei der Speicherchip einen Flash-Speicherchip, einen Phasenwechsel-Direktzugriffsspeicher oder einen resistiven Direktzugriffsspeicher umfasst.

14. Verfahren zum Zugreifen auf eine nichtflüchtige Speichervorrichtung (10), wobei die nichtflüchtige Speichervorrichtung (10) ein Schnittstellenmodul (11), ein Steuermodul (12), einen Lesecache (13) und einen Speicherchip (14) umfasst und das Verfahren umfasst:
• Empfangen, durch das Schnittstellenmodul (11), eines von einem Host gesendeten ersten Leseanforderungssignals, wobei das erste Leseanforderungssignal eine Adresse des Speicherchips (14) umfasst (Schritt 401);
• wenn die durch das erste Leseanforderungssignal angeforderten Lesedaten nicht im Lesecache (13) gespeichert sind, Anweisen des Steuermoduls (12), durch das Schnittstellenmodul (11), die gelesenen Daten aus dem Speicherchip zu lesen (Schritt 407); **dadurch gekennzeichnet, dass** das Verfahren ferner umfasst:
Senden, durch das Schnittstellenmodul (11), eines ersten Interruptsignals, um den Host anzuweisen, einen Interrupthandler nach dem Lesevorgangszeitraum auszuführen; und
Senden, durch das Schnittstellenmodul (11), von vorbestimmten Daten an den Host (Schritte 404, 405), um den Host zu veranlassen, den aktuellen Lesevorgangszeitraum zu beenden.

15. Verfahren nach Anspruch 14, wobei das Verfahren ferner umfasst:
Lesen, durch das Steuermodul, der Lesedaten aus dem Speicherchip gemäß einer Anweisung des Schnittstellenmoduls und Speichern der Lesedaten in dem Lesecache;
Empfangen, durch das Schnittstellenmodul, eines zweiten von dem Host gesendeten Leseanforderungssignals, nachdem der Interrupthandler beendet wurde, wobei das zweite Leseanforderungssignal die Adresse des Speicherchips umfasst; und
Senden, durch das Schnittstellenmodul, der im Lesecache gespeicherten Lesedaten durch das Steuermodul an den Host.

## Revendications

1. Dispositif de stockage non volatil (10), dans lequel le dispositif de stockage non volatil (10) comprend un module d'interface (11), un module de commande (12), une mémoire cache de lecture (13), et une puce de stockage (14), et le module d'interface (11) est configuré pour :
• recevoir un premier signal de requête de lecture envoyé par un hôte, dans lequel le premier signal de requête de lecture comprend une adresse de la puce de stockage (14) ;
• lorsque des données de lecture demandées par le premier signal de requête de lecture ne sont pas stockées dans la mémoire cache de lecture (13), demander au module de commande (12) de lire les données de lecture à partir de la puce de stockage (14) ; **caractérisé en ce que** le module d'interface est en outre configuré pour envoyer un premier signal d'interruption à l'hôte pour demander à l'hôte d'exécuter un gestionnaire d'interruptions après la période d'opération de lecture ; et
• envoyer des données prédéterminées à l'hôte pour pousser l'hôte à terminer la période d'opération de lecture.

2. Dispositif de stockage non volatil selon la revendication 1, dans lequel le module de commande est configuré pour :
lire les données de lecture à partir de la puce de stockage en fonction d'une instruction du module d'interface, et stocker les données de lecture dans la mémoire cache de lecture ; et
le module d'interface est en outre configuré pour :
recevoir un deuxième signal de requête de lecture envoyé par l'hôte après la sortie du gestionnaire d'interruptions, dans lequel le deuxième signal de requête de lecture comprend l'adresse de la puce de stockage ; et envoyer les données de lecture stockées dans la mémoire cache de lecture par le module de commande à l'hôte.

3. Dispositif de stockage non volatil selon la revendication 1 ou 2, dans lequel le dispositif de stockage non volatil comprend en outre une mémoire cache d'écriture, et le module d'interface est en outre configuré pour :
recevoir un premier signal de requête d'écriture envoyé par l'hôte et écrire des données que le premier signal de requête d'écriture demande d'écrire, dans lequel le premier signal de requête d'écriture comprend l'adresse de la puce de stockage ;
lorsque la mémoire cache d'écriture ne possède pas suffisamment d'espace pour stocker les données d'écriture, rejeter les données d'écriture, et demander au module de commande de stocker des données existant déjà dans la mémoire cache d'écriture dans la puce de stockage ; et
envoyer un deuxième signal d'interruption à l'hôte pour demander à l'hôte d'exécuter le gestionnaire d'interruptions après la période d'opération d'écriture en cours.

4. Dispositif de stockage non volatil selon la revendication 3, dans lequel le module de commande est en outre configuré pour :
stocker les données existant déjà dans la mémoire cache d'écriture dans la puce de stockage en fonction d'une instruction du module d'interface, de sorte que la mémoire cache d'écriture réserve suffisamment d'espace pour stocker les données d'écriture ; et
le module d'interface est en outre configuré pour :
recevoir un deuxième signal de requête d'écriture envoyé par l'hôte après la sortie du gestionnaire d'interruptions ; et
recevoir les données d'écriture envoyées par l'hôte, et stocker les données d'écriture dans la mémoire cache d'écriture.

5. Dispositif de stockage non volatil selon la revendication 3 ou 4, dans lequel le premier signal d'interruption et/ou le deuxième signal d'interruption sont utilisés pour demander à l'hôte de déterminer un temps de délai, de sorte que l'hôte respecte un délai dans le gestionnaire d'interruptions en fonction du temps de délai.

6. Dispositif de stockage non volatil selon la revendication 5, dans lequel le module d'interface comprend un registre de temps de délai, et le premier signal d'interruption et/ou le deuxième signal d'interruption sont utilisés pour demander à l'hôte d'obtenir le temps de délai à partir du registre de temps de délai.

7. Dispositif de stockage non volatil selon la revendication 5, dans lequel un bus de circuit inter-intégré I2C du dispositif de stockage non volatil se connecte à une puce d'entrée-sortie à usage général GPIO, et le premier signal d'interruption et/ou le deuxième signal d'interruption sont utilisés pour demander à l'hôte de déterminer le temps de délai en fonction de la puce GPIO.

8. Dispositif de stockage non volatil selon la revendication 5, dans lequel le module d'interface comprend un premier registre d'état, le premier signal d'interruption et/ou le deuxième signal d'interruption sont utilisés pour demander à l'hôte de déterminer le temps de délai en fonction du premier registre d'état, et le premier registre d'état est configuré pour indiquer un état de la puce de stockage.

9. Dispositif de stockage non volatil selon la revendication 5, dans lequel le module d'interface comprend un premier registre d'état, le premier registre d'état est configuré pour indiquer un état de la puce de stockage, un bus I2C du dispositif de stockage non volatil se connecte à une puce de mémoire morte effaçable électriquement et programmable (EEPROM), la puce EEPROM est configurée pour indiquer une correspondance entre l'état et le temps de délai, et le premier signal d'interruption et/ou le deuxième signal d'interruption sont utilisés pour demander à l'hôte de déterminer le temps de délai en fonction du premier registre d'état et de la puce EEPROM.

10. Dispositif de stockage non volatil selon l'une quelconque des revendications 1 à 9, dans lequel le module d'interface comprend un deuxième registre d'état, et le deuxième registre d'état est configuré pour demander à l'hôte de déterminer, en fonction du deuxième registre d'état, un délai dans le gestionnaire d'interruptions.

11. Dispositif de stockage non volatil selon la revendication 10, dans lequel le bus I2C du dispositif de stockage non volatil se connecte à un capteur de température, et le deuxième registre d'état est configuré pour indiquer qu'une température du dispositif de stockage non volatil qui est indiquée par le capteur de température ne dépasse pas un seuil.

12. Dispositif de stockage non volatil selon la revendication 10, dans lequel le dispositif de stockage non volatil se connecte à l'hôte en utilisant une interface de mémoire, et le deuxième registre d'état est configuré pour indiquer qu'aucune erreur ne se produit dans des signaux de contrôle de parité d'adresse et de commande de l'interface de mémoire.

13. Dispositif de stockage non volatil selon l'une quelconque des revendications 1 à 12, dans lequel la puce de stockage comprend une puce de mémoire flash, une mémoire vive à changement de phase, ou une mémoire vive résistive.

14. Procédé pour accéder à un dispositif de stockage non volatil (10), dans lequel le dispositif de stockage non volatil (10) comprend un module d'interface (11), un module de commande (12), une mémoire cache de lecture (13), et une puce de stockage (14), et le procédé comprend :
• la réception, par le module d'interface (11), d'un premier signal de requête de lecture envoyé par un hôte, dans lequel le premier signal de requête de lecture comprend une adresse de la puce de stockage (14) (étape 401) ;
• lorsque des données de lecture demandées par le premier signal de requête de lecture ne sont pas stockées dans la mémoire cache de lecture (13), l'envoi d'une instruction, par le module d'interface (11), au module de commande (12) de lecture des données de lecture à partir de la puce de stockage (étape 407) ; **caractérisé en ce que** le procédé comprend en outre l'envoi, par le module d'interface (11), d'un premier signal d'interruption pour demander à l'hôte d'exécuter un gestionnaire d'interruptions après la période d'opération de lecture ; et
• l'envoi, par le module d'interface (11), de données prédéterminées à l'hôte (étapes 404, 405) pour pousser l'hôte à terminer la période d'opération de lecture en cours.

15. Procédé selon la revendication 14, dans lequel le procédé comprend en outre :
la lecture, par le module de commande, des données de lecture à partir de la puce de stockage en fonction d'une instruction du module d'interface, et le stockage des données de lecture dans la mémoire cache de lecture ;
la réception, par le module d'interface, d'un deuxième signal de requête de lecture envoyé par l'hôte après la sortie du gestionnaire d'interruptions, dans lequel le deuxième signal de requête de lecture comprend l'adresse de la puce de stockage ; et
l'envoi, par le module d'interface, des données de lecture stockées dans la mémoire cache de lecture par le module de commande à l'hôte.
